# EUROPEAN PATENT APPLICATION

(11) **EP 1 363 409 A1**
(43) Date of publication of application: **19.11.2003**
(21) Application number: 03011261.9
(22) Date of filing: 16.05.2003
(51) Int. Cl.: H04B 3/54, H04B 3/56

(54) **Wide-band communication network for power line system**

(30) Priority: 17.05.2002 IT TO20020426
(71) Applicant: Telsey S.p.A., 31055 Quinto di Treviso (IT)
(72) Inventor: Chino, Francesco, 35125 Padova (IT); Ponte, Luca, 33036 Mereto Di Tomba (IT); Mestriner, Roberto, 31057 Silea (IT)
(74) Representative: Cerbaro, Elena, Dr.

(57) **Abstract**

A wide-band communication network connection system (1) which employs a private electric power line (2), specifically used for supplying electric power to an electric system (3) inside a building (4), as a physical transmission means for two-way data communication between a local data communication network (5) located in the same part of the building (4) as the electric system (3), and a main data communication network (6) for supporting wide-band data transmission.

## Description

The present invention relates to a wide-band communication network connection system.

As is known, the gradual extension in main wide-band, e.g. optical-fibre, communication networks by telecommunications companies now enables more and more homes and/or offices or buildings of any type to benefit from so-called "wide-band" services, i.e. communication services enabling fast, standardized voice, data, INTERNET, INTERNET VIDEO transmission, etc. over a single communication channel capable of supporting a data transmission speed of 10 Mbps or over.

Distribution of wide-band services to a building calls for an adapter, e.g. a "gateway", which is installed inside the building itself to interface the main communication network, i.e. the wide-band optical-fibre network, with the wired local communication network inside the building, to enable communication with the various electronic devices, e.g. telephones, faxes, personal computers, televisions, etc., normally installed in the building, and so make the above wide-band services available to users.

Main wide-band communication networks normally comprise optical-fibre cables, which extend along a number routes under roads or pavements up to the outside of the building.

At present, to interface the local communication network, in particular the adapter, to the main wide-band communication network, while at the same time maintaining the wide band, the user is forced to wire inside the building a local optical-fibre cable, which is connected at one end to the end of the main optical-fibre cable, normally wired by the service company inside the building basement, and at the other end to the input port of the adapter.

Connection of the local communication network to the main wide-band communication network, i.e. installing and connecting the local optical-fibre cable inside the building, is largely responsible for the high cost of access to wide-band services, and hence the very limited number of new users. In fact, installing the local optical-fibre cable to wide-band connect any building, particularly those with local networks on the top floors, involves major building work, and hence a good deal of expense and inconvenience to the user, and the assistance of skilled technicians to complete wiring of the optical-fibre cables, thus increasing connection cost.

It is an object of the present invention to provide a wide-band communication network connection system, which is straightforward, cheap and, at the same time, non-invasive.

According to the present invention, there is provided a wide-band communication network connection system comprising a main data communication network, a local data communication network, a local electric system, a main electric panel controlling electric power supply from a public electric power line, and a private electric power line having a first end connected to said main electric panel, and a second end connected to said local electric system to specifically carry electric power to the local electric system; said connection system being characterized by comprising a first communication unit connectable to said main data communication network and to the first end of said private electric power line, and a second communication unit connectable to the second end of said private electric power line and to said local data communication network; said first and said second communication unit effecting two-way data exchange over said private electric power line, so as to connect said main data communication network to said local data communication network.

A non-limiting embodiment of the present invention will be described by way of example with reference to the accompanying drawings, in which:
Figure 1 shows, schematically, a wide-band communication network connection system in accordance with the teachings of the present invention;
Figure 2 shows a block diagram of the wide-band communication network connection system in Figure 1.

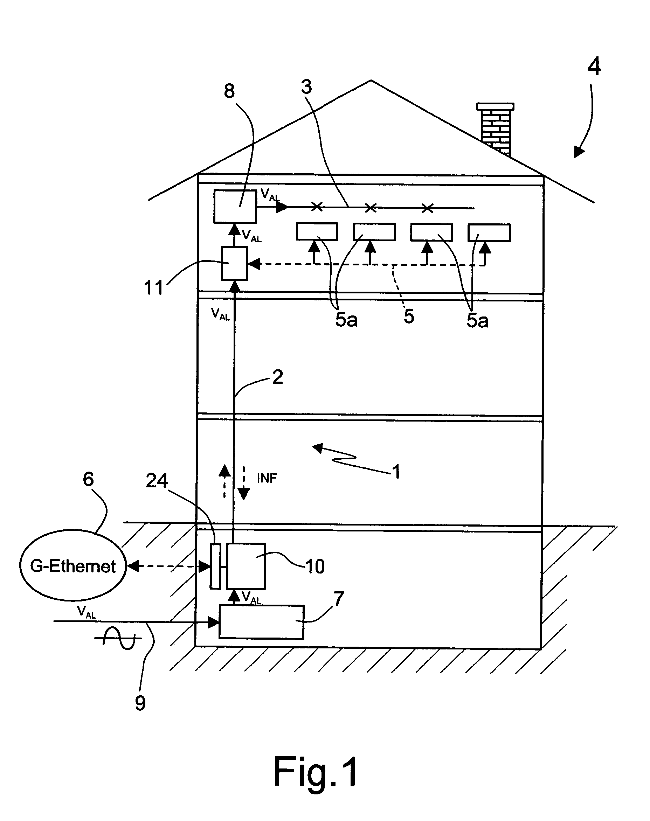

Number 1 in Figure 1 indicates as a whole a wide-band communication network connection system permitting two-way communication between two distinct data communication networks, using a private electric power line 2 as a physical means of data transmission. In the example shown, the private electric power line 2 is located inside a building 4, and is used specifically to supply electric power to an electric system 3 inside building 4.

The two communication networks are defined by a local data communication network 5 located, like electric system 3, inside building 4, and which may comprise a known LAN (Local Area Network); and by a main data communication network 6, e.g. a "Gigabit-Ethernet" or so-called "G-Ethernet" network, capable of supporting wide-band data transmission (at Gbps data transmission speeds), and employing a known, e.g. Ethernet, standard communication protocol.

It should be pointed out that, hereinafter, the term "wide-band communication network" is used to indicate a communication network capable of supporting a data transmission speed of preferably, though not necessarily, 10 Mbps or over.

With reference to Figure 1, private electric power line 2 comprises a number of electric power cables (not shown) made of appropriately insulated electric conducting material, and which are typically wired inside building 4 to specifically "carry" electric power from a main electric panel 7 installed in a given part, e.g. the basement or ground floor, of building 4, to a local electric panel 8 normally located on the same floor of building 4 as electric system 3 and local data communication network 5.

It should be pointed out that the number of electric cables of private electric power line 2 vary depending on the type of power supplied to electric system 3 by private electric power line 2, which, depending on the electric system being supplied, may be single-, two- or three-phase.

Private electric power line 2 conducts an electric power signal of predetermined voltage and frequency. In the following example, for the sake of simplicity, specific reference is made, purely by way of a non-limiting example, to a private electric power line 2 supplying a sinusoidal power signal V_{AL} having an amplitude, for example, of 220 volts, and a frequency, for example, of 50 Hz.

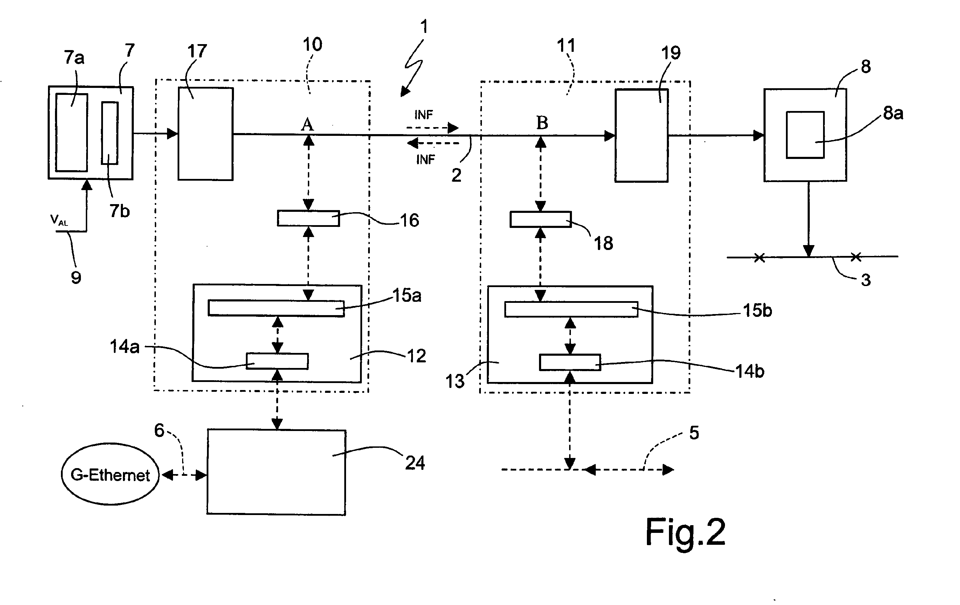

With reference to Figures 1 and 2, main electric panel 7 is connected immediately upstream from private electric power line 2, and comprises a meter 7a for measuring the electric power drawn by electric system 3; and a main safety switch 7b for selectively connecting/disconnecting a first end of private electric power line 2 from a public electric power line 9.

It should be pointed out that, hereinafter, "public electric power line 9" is intended to mean the power line portion (typically the property of the electricity supply company) extending from a distribution substation (not shown) to the input terminal of meter 7a.

Local electric panel 8 is connected immediately upstream from electric system 3, and provides for connecting/disconnecting a second end of private electric power line 2 from electric system 3. In the example shown, local electric panel 8 comprises, for example, a local differential switch 8a for disconnecting local electric system 3 from private electric power line 2 in the event of any unbalance in the current drawn by the electric system.

With reference to the example shown in Figures 1 and 2, in addition to private electric power line 2, wide-band network connection system 1 also comprises a first and a second communication unit 10 and 11, which are connectable respectively to the first and second end of private electric power line 2 to permit two-way wide-band data communication between them, using private electric power line 2 as a physical transmission means. More specifically, first communication unit 10 is connectable on one side to main data communication network 6, and on the other to the first end of private electric power line 2 downstream from main electric panel 7, so as to interface main data communication network 6 and private electric power line 2.

It should be pointed out that main data communication network 6 is defined by a network capable of supporting wide-band transmission, e.g. an optical-fibre network, a network of cables of electric conducting material, or similar networks, one cable of which extends inside the floor (e.g. basement) of building 4 housing main electric panel 7, so as to connect first communication unit 10 to main data communication network 6.

First communication unit 10 and main data communication network 6 may conveniently be connected by a known interface device 24 for exchanging data with communication unit 10 and main data communication network 6 according to predetermined communication protocols.

For example, interface device 24 may be defined by a router or switch having at least one input port to which the cable of main data communication network 6 is connected, and at least one output port connectable over a communication cable to first communication unit 10. The router controls two-way data exchange between first communication unit 10 and main data communication network 6 using a first communication protocol (e.g. Ethernet 10/100 BaseT) for data exchange with main data communication network 6, and a second protocol, different from the first (e.g. Full Duplex 10 BaseT), for data exchange with first communication unit 10.

Second communication unit 11 is connectable on one side to local data communication network 5, and on the other to the second end of private electric power line 2 upstream from local electric panel 8, so as to interface local data communication network 5 and private electric power line 2.

Local data communication network 5 may conveniently be defined by any known communication network, to which are connected communication devices 5a, such as faxes, telephones, personal computers, video devices, capable of employing the wide-band services provided by main wide-band data communication network 6.

With reference to the Figure 2 example, first and second communication unit 10 and 11 comprise respective transmitter-receiver devices 12 and 13, which are connected to private electric power line 2, and effect symmetrical two-way data exchange over private electric power line 2 using a VDSL (Very high-speed Digital Subscriber Line) transmission-reception protocol. The VDSL protocol employs a symmetrical data communication standard, in which data transmission speed, i.e. the communication band, is the same in both transmission directions. For example, using the VDSL protocol, which, being known, is not described in detail, the band offered by connection system 1 when transmitting data upstream and downstream, i.e. data transmission by first communication unit 10 from and to data communication unit 11 respectively, may advantageously be 10 Mbps or over.

Transmitter-receiver devices 12 and 13 comprise respective modulators/demodulators 14a, 14b, which are connected respectively to main data communication network 6 via interface device 24 and to local data communication network 5, and modulate/demodulate data using a known QAM (Quadrature Amplitude Modulation) technique to permit two-way data communication over private electric power line 2.

It should be pointed out that to implement the VDSL data transmission-reception protocol with the QAM technique over private electric power line 2, transmitter-receiver devices 12 and 13 are provided with respective matching circuits 15a, 15b, which are connected between private electric power line 2 and corresponding modulators/demodulators 14a, 14b to form a communication channel having the specifications of a Powerline communication means.

In other words, connecting matching circuits 15a, 15b and private electric power line 2 produces a transmission channel having the same specifications as a Powerline channel, which, being a known transmission channel model, is not described in detail.

With reference to Figure 2, communication unit 10 also comprises a first filtration circuit 16 interposed between transmitter-receiver device 12 and private electric power line 2 to prevent passage of the power signal V_{AL} on private electric power line 2 to transmitter-receiver device 12.

In the example shown, first filtration circuit 16 may be defined by a high-pass filter connected on one side to matching circuit 15a of transmitter-receiver device 12, and on the other to private electric power line 2, and designed to filter, i.e. greatly attenuate, the amplitude of any signal of a frequency below a cutoff frequency f₁ of, for example, roughly 3 KHz.

First communication unit 10 also comprises a second filtration circuit 17 interposed between the first end of private electric power line 2 and main electric panel 7, upstream from the connection point (indicated A) between first filtration circuit 16 and private electric power line 2, to prevent passage to main electric panel 7 of the signals INF associated with the data transmitted by first and second communication unit 10 and 11 along private electric power line 2.

More specifically, second filtration circuit 17 may be defined by a low-pass filter connected between connection point A and main electric panel 7, and designed to filter, i.e. greatly attenuate, the amplitude of any signal of a frequency above a cutoff frequency f₂ of, for example, roughly 100 Hz.

It should be pointed out that second filtration circuit 17 is designed to prevent data transmission to meter 7a and main differential switch 7b.

Second filtration circuit 17 obviously also provides for filtering, upstream from private electric power line 2, any signal of a frequency above frequency f₂, thus eliminating interference in data signals INF by any disturbance (noise) on public electric power line 9 which could be transmitted to private electric power line 2.

Second communication unit 11 comprises a first filtration circuit 18 interposed between transmitter-receiver device 13 and private electric power line 2 to prevent passage of the power signal V_{AL} on private electric power line 2 to transmitter-receiver device 13.

In the example shown, first filtration circuit 18 may be defined by a high-pass filter connected on one side to matching circuit 15b of transmitter-receiver device 13, and on the other to private electric power line 2, and designed to filter, i.e. greatly attenuate, the amplitude of any signal of a frequency below cutoff frequency f₁.

Second communication unit 11 also comprises a second filtration circuit 19 interposed between the second end of private electric power line 2 and local electric panel 8, downstream from the connection point (indicated B) between first filtration circuit 18 and private electric power line 2, to prevent passage to local electric panel 8 of the signals INF associated with the data transmitted by first and second communication unit 10 and 11 along private electric power line 2. More specifically, second filtration circuit 19 may be defined by a low-pass filter connected between connection point B and local electric panel 8, and designed to filter, i.e. greatly attenuate, the amplitude of any signal of a frequency above cutoff frequency f₂.

It should be pointed out that second filtration circuit 19 of second communication unit 11 is designed to prevent signals INF from being transmitted to local differential switch 8a and/or to other protection devices normally integrated in local electric panel 8.

Second filtration circuit 19 obviously also provides for filtering, downstream from private electric power line 2, any signal generated by any type of device or electric load connectable to local electric system 3, e.g. an electric motor, a lamp, a capacitive or inductive load, etc., and of a frequency above frequency f₂, thus advantageously eliminating interference by any disturbance or noise transmitted over local electric system 3 in signals INF associated with the data transmitted over private electric power line 2.

In actual use, public electric power line 9 carries electric power, i.e. power signal V_{AL} supplied by the distribution substation (not shown), to main electric panel 7 inside building 4, and private electric power line 2 feeds electric power signal V_{AL} from main electric panel 7 to local electric system 3 via local electric panel 8. More specifically, the path travelled by power signal V_{AL} is limited to private electric power line 2, by first filtration circuits 16 and 18 preventing power signal V_{AL} from entering transmitter-receiver devices 12 and 13.

Signals INF associated with the data on main data communication network 6 and/or local data communication network 5, on the other hand, are exchanged both ways by communication units 10 and 11 by means of a VDSL communication protocol, using private electric power line 2 as a transmission means. More specifically, the path travelled by signals INF is limited to private electric power line 2, i.e. between main and local electric panels 7 and 8, by second filtration circuits 17 and 19 preventing passage through the electric panels of signals INF and, in particular, any signal of a frequency above cutoff frequency f₂.

Connection system 1 as described above is extremely advantageous by permitting connection of the local and wide-band communication networks with no need for additional optical-fibre cables inside the building, thus eliminating any invasive building work, and greatly reducing installation cost.

Besides being extremely straightforward and easy to install, by simply connecting communication units 10 and 11 electrically to private electric power line 2, the connection system also has the further advantage of releasing the user from any dependence on the electricity supply company. That is, as is known, the private electric power line 2 employed by connection system 1 for data transmission between data communication networks 5 and 6 is normally the property of the user, and can therefore be employed by the user with no additional cost or contractual agreement with the power supply company. Moreover, besides ensuring a communication band (10Mbps Full Duplex) permitting user access to any last-generation "wide-band" service (video on demand, e-learning, video conference, etc.), using communication units 10 and 11 employing a VDSL communication protocol over a Powerline communication channel makes for extremely stable and, at the same time, highly reliable wide-band connection. In fact, unlike other "adaptive" systems based on OFDM or DMT modulation (e.g. ADSL technology), the VDSL communication protocol employed in system 1 ensures the characteristics of the transmission channel in terms of data transmission speed are maintained when connecting communication units 10 and 11.

Finally, connection system 1 is compatible with any private electric power line 2, i.e. fully conforms with regulations (IEC) governing electric power distribution to electric systems, by the filtration circuits not only eliminating malfunction of the meter and/or safety switches caused by the data signals interfering with power signal V_{AL}, but also eliminating any transmission errors caused by noise generated by electric system 3 or public electric power line 9 interfering with the data signals.

Clearly, changes may be made to the connection system as described and illustrated herein without, however, departing from the scope of the present invention.

In particular, two-way data exchange over private electric power line 2 may be achieved by transmitter-receiver devices 12 and 13 of first and second communication unit 10 and 11 using any xDSL protocol, as opposed to the VDSL protocol described above.

## Claims

1. A wide-band communication network connection system (1) comprising a main data communication network (6), a local data communication network (5), a local electric system (3), a main electric panel (7) controlling electric power supply from a public electric power line (9), and a private electric power line (2) having a first end connected to said main electric panel (7), and a second end connected to said local electric system (3) to specifically carry electric power to the local electric system (3); said connection system (1) being **characterized by** comprising a first communication unit (10) connectable to said main data communication network (6) and to the first end of said private electric power line (2), and a second communication unit (11) connectable to the second end of said private electric power line (2) and to said local data communication network (5); said first and said second communication unit (10, 11) effecting two-way data exchange over said private electric power line (2), so as to connect said main data communication network (6) to said local data communication network (5).

2. A connection system as claimed in Claim 1, **characterized in that** said first and said second communication unit (10, 11) comprise respective transmitter-receiver devices (12, 13) connected to said private electric power line (2), and for effecting two-way data exchange between them over the private electric power line (2) using a VDSL transmission-reception protocol; said transmitter-receiver devices (12, 13) being connected to said main data communication network (6) and said local data communication network (5) respectively.

3. A connection system as claimed in Claim 1, **characterized in that** said first and said second communication unit (10, 11) comprise respective transmitter-receiver devices (12, 13) connected to said private electric power line (2), and for effecting two-way data exchange between them over the private electric power line (2) using an xDSL transmission-reception protocol; said transmitter-receiver devices (12, 13) being connected to said main data communication network (6) and said local data communication network (5) respectively.

4. A connection system as claimed in Claim 2 or 3, **characterized in that** said transmitter-receiver devices (12, 13) comprise respective modulating means (14a, 14b) for modulating/demodulating, with a QAM technique, signals (INF) associated with the data to be transmitted over said private electric power line (2).

5. A connection system as claimed in Claim 4, **characterized in that** said transmitter-receiver devices (12, 13) comprise respective matching means (15a, 15b) connected between the private electric power line (2) and respective said modulating means (14a, 14b), and cooperating with the private electric power line (2) to form a Powerline communication channel.

6. A connection system as claimed in any one of the foregoing Claims, **characterized by** comprising a local electric panel (8) for connecting said second end of said private electric power line (2) to said local electric system (3); said second communication unit (10) being connectable between said private electric power line (2) and said local electric panel (8).

7. A connection system as claimed in Claim 6, **characterized in that** said first and said second communication unit (10, 11) comprise respective first filtration means (16, 18) for preventing the power signals (V_{AL}) associated with said electric power on said private electric power line (2) from passing to said first and said second communication unit (10, 11).

8. A connection system as claimed in Claim 6 or 7, **characterized in that** said first and said second communication unit (10, 11) comprise respective second filtration means (17, 19) for preventing the signals (INF) associated with the data on said private electric power line (2) from being transmitted via said first end to said main electric panel (7), and via said second end of said private electric power line (2) to said local electric panel (8).

9. A connection system as claimed in Claim 7 or 8, **characterized in that** said first filtration means (16, 18) comprise high-pass filters for filtering any signal having a frequency less than or equal to a predetermined threshold frequency (f₁).

10. A connection system as claimed in Claim 8 or 9, **characterized in that** said second filtration means (17, 19) comprise low-pass filters for filtering any signal having a frequency greater than or equal to a predetermined threshold frequency (f₂).

11. A connection system as claimed in any one of the foregoing Claims, **characterized in that** said main data communication network (6) is a Gigabit-Ethernet type communication network.

12. A connection system as claimed in any one of the foregoing Claims, **characterized in that** said first communication unit is connected to said main data communication network (6) via interface means (24).
